# EUROPEAN PATENT SPECIFICATION

(11) **EP 1 740 364 B1**
(45) Date of publication and mention of the grant of the patent: **13.05.2009**
(21) Application number: 05728166.9
(22) Date of filing: 14.03.2005
(51) Int. Cl.: B29C 55/28

(54) **MULTI-CAPABLE ELASTIC LAMINATE PROCESS**
VIELZWECKVERFAHREN ZUR HERSTELLUNG VON ELASTISCHEN LAMINATEN
PROCEDE PERMETTANT D'OBTENIR UN STRATIFIE ELASTIQUE POLYVALENT

(30) Priority: 30.04.2004 US 836051
(43) Date of publication of application: 10.01.2007
(73) Proprietor: KIMBERLY-CLARK WORLDWIDE, INC., Neenah, WI 54956 (US)
(72) Inventor: MCCORMACK, Ann, L., Cumming, GA 30041 (US); LOVELESS, Keith, B., Cumming, GA 30041 (US); NG, Wing-Chak, Suwanee, GA 30024 (US)
(74) Representative: Davies, Christopher Robert
(86) International application number: PCT/US2005/008540
(87) International publication number: WO 2005/110719

(56) References cited:
- WO-A-98/54389
- WO-A-99/30904
- US-A- 4 231 832
- US-A- 4 395 459
- US-A- 5 169 712

## Description

### BACKGROUND OF THE INVENTION

Many of the medical care products, protective wear garments, mortuary and veterinary products, and personal care products in use today are available as disposable products. By disposable, it is meant that the product is used only a few times, or even only once, before being discarded. Examples of such products include, but are not limited to, medical and health care products such as surgical drapes, gowns and bandages, protective workwear garments such as coveralls and lab coats, and infant, child and adult personal care absorbent products such as diapers, training pants, incontinence garments and pads, sanitary napkins, wipes and the like. These products must be manufactured at a cost which is consistent with single- or limited-use disposability.

Fibrous nonwoven webs formed by extrusion processes such as spunbonding and meltblowing, and by mechanical dry-forming process such as air-laying and carding, used in combination with thermoplastic film or microfiber layers, may be utilized as components of these disposable products since their manufacture is often inexpensive relative to the cost of woven or knitted components. A layer of film or microfibers may be used to impart liquid barrier properties, and an elastic layer (elastic film or elastic microfibers, for example) may be used to impart additional properties of stretch and recovery. However, films in general and elastic layers in particular, whether a film sheet layer or a microfiber layer, often have unpleasant tactile aesthetic properties, such as feeling rubbery or tacky to the touch, making them unpleasant and uncomfortable against the wearer's skin. Fibrous nonwoven webs, on the other hand, have better tactile, comfort and aesthetic properties.

The tactile aesthetic properties of elastic films can be improved by forming a laminate of an elastic film with one or more non-elastic materials, such as fibrous nonwoven webs, on the outer surface of the elastic material. However, fibrous nonwoven webs formed from non-elastic polymers such as, for example, polyolefins are generally considered non-elastic and may have poor extensibility, and when non-elastic nonwoven webs are laminated to elastic materials the resulting laminate may also be restricted in its elastic properties. Therefore, laminates of elastic materials with nonwoven webs have been developed wherein the nonwoven webs are made extensible by processes such as necking or gathering.

However, since these elastic/nonwoven laminate materials are often utilized in limited- or single-use disposable products, there remains a strong need for reducing the cost of producing these materials. In addition, it would be highly advantageous for such a production process to be provided as an efficient in-line production process co-extensive with the production of the elastic film material. Further, the need exists for an efficient, in-line elastic laminate production process which is capable of producing a variety of elastic laminate materials in a manner consistent with the costs dictated by the disposable applications for items which are utilized in limited- or single-use disposable products.

### SUMMARY OF THE INVENTION

The present invention provides an efficient, in-line process for forming elastic laminates comprising elastic blown film and one or more fibrous nonwoven webs. In embodiments, the process provides for elastic laminates having cross machine direction stretch and recovery, elastic laminates having machine direction stretch and recovery, and elastic laminates having both machine direction and cross machine direction stretch and recovery. In one embodiment, the process includes the steps of extruding a thermoplastic polymer composition comprising elastic polymer, blowing the extruded thermoplastic polymer composition to form a blown film bubble, directing the bubble to a nip formed between a first pair of rollers to collapse the bubble into a nascent film sheet, providing at least a first fibrous nonwoven web, and directing the first fibrous nonwoven web to the nip to contact a side of the nascent film sheet to form a laminate including the film sheet and the first fibrous nonwoven web. The process may further comprise an additional nip and bonding the laminate in the additional nip by thermal bonding or ultrasonic bonding.

In another embodiment, the process includes the steps of extruding a thermoplastic polymer composition including an elastic polymer, blowing the extruded thermoplastic polymer composition to form a blown film bubble, directing the bubble to a first nip formed between a first pair of rollers to collapse the bubble into a film sheet, the first pair rollers rotating at a first velocity, directing the film sheet to a second nip formed between a second pair of rollers rotating at a second velocity, providing at least a first fibrous nonwoven web, and directing the nonwoven web to one of the first nip or the second nip to contact a side of the film sheet to form a laminate including the film sheet and the nonwoven web. In embodiments, the film sheet may be contacted by the first fibrous nonwoven web at the second nip, and the second velocity may be greater than the first velocity.

The process embodiments described may desirably further include providing a second fibrous nonwoven web which is directed to the side of the film sheet opposite the first fibrous nonwoven web, to form a laminate having at least one fibrous nonwoven web on each side of the film sheet. In embodiments, it may be desirable for the film sheet to be in an at least partially molten state when it is contacted by the nonwoven web or webs. It may also or alternatively be desirable for the first nip and/or second nip to be a heated nip. It may also or alternatively be desirable to apply an adhesive to the nonwoven web or webs prior to contact with the film sheet. The fibrous nonwoven web or webs may desirably be provided as necked nonwoven webs, or may be incrementally stretched by optionally provided grooved rollers, or may be necked during the lamination process by operating the first nip at a linear velocity greater than the linear velocity at which the fibrous nonwoven web or webs are provided.

Also provided are elastic laminates formed from embodiments of the process of the invention. The laminates may be bilayer laminates including the film sheet and a fibrous nonwoven web on one side of the film, or trilayer laminates including the film sheet and a fibrous nonwoven web on both sides of the film. The laminates may have cross machine direction stretch and recovery, machine direction stretch and recovery, and/or both machine direction and cross machine direction stretch and recovery. The elastic laminates may additionally be breathable laminates.

### BRIEF DESCRIPTION OF THE DRAWINGS

FIG. 1 schematically illustrates a process for forming elastic film nonwoven web laminates according to an embodiment of the invention.
FIG. 2 schematically illustrates a process for forming elastic film nonwoven web laminates according to another embodiment of the invention.

### DEFINITIONS

As used herein and in the claims, the term "comprising" is inclusive or open-ended and does not exclude additional unrecited elements, compositional components, or method steps. Accordingly, the term "comprising" encompasses the more restrictive terms "consisting essentially of" and "consisting of".

As used herein the term "polymer" generally includes but is not limited to, homopolymers, copolymers, such as for example, block, graft, random and alternating copolymers, terpolymers, etc. and blends and modifications thereof. Furthermore, unless otherwise specifically limited, the term "polymer" shall include all possible geometrical configurations of the material. These configurations include, but are not limited to isotactic, syndiotactic and random symmetries. As used herein the term "thermoplastic" or "thermoplastic polymer" refers to polymers that will soften and flow or melt when heat and/or pressure are applied, the changes being reversible.

As used herein, the terms "elastic" and "elastomeric" are generally used to refer to a material that, upon application of a force, is stretchable to a stretched, biased length which is at least about 133%, or one and a third times, its relaxed, unstretched length, and which upon release of the stretching, biasing force will recover at least about 50% of its elongation. By way of example only, an elastic material having a relaxed, unstretched length of 10 centimeters may be elongated to at least about 13.3 centimeters by the application of a stretching or biasing force. Upon release of the stretching or biasing force the elastic material will recover to a length of not more than 11.65 centimeters.

As used herein the term "fibers" refers to both staple length fibers and substantially continuous filaments, unless otherwise indicated. As used herein the term "substantially continuous" with respect to a filament or fiber means a filament or fiber having a length much greater than its diameter, for example having a length to diameter ratio in excess of about 15,000 to 1, and desirably in excess of 50,000 to 1.

As used herein the term "monocomponent" filament refers to a filament formed from one or more extruders using only one polymer composition. This is not meant to exclude filaments formed from one polymer to which small amounts of additives have been added for color, anti-static properties, lubrication, hydrophilicity, etc.

As used herein the term "multicomponent filaments" refers to filaments that have been formed from at least two component polymers, or the same polymer with different properties or additives, extruded from separate extruders but spun together to form one filament. Multicomponent filaments are also sometimes referred to as conjugate filaments or bicomponent filaments, although more than two components may be used. The polymers are arranged in substantially constantly positioned distinct zones across the cross-section of the multicomponent filaments and extend continuously along the length of the multicomponent filaments. The configuration of such a multicomponent filament may be, for example, a concentric or eccentric sheath/core arrangement wherein one polymer is surrounded by another, or may be a side by side arrangement, an "islands-in-the-sea" arrangement, or arranged as pie-wedge shapes or as stripes on a round, oval or rectangular cross-section filament, or other configurations. Multicomponent filaments are taught in U.S. Pat. No. 5,108,820 to Kaneko et al. and U.S. Pat. No. 5,336,552 to Strack et al. Conjugate fibers are also taught in U.S. Patent No. 5,382,400 to Pike et al. and may be used to produced crimp in the fibers by using the differential rates of expansion and contraction of the two (or more) polymers. For two component filaments, the polymers may be present in ratios of 75/25, 50/50, 25/75 or any other desired ratios. In addition, any given component of a multicomponent filament may desirably comprise two or more polymers as a multiconstituent blend component.

As used herein the terms "biconstituent filament" or "multiconstituent filament" refer to a filament formed from at least two polymers, or the same polymer with different properties or additives, extruded from the same extruder as a blend. Multiconstituent filaments do not have the polymer components arranged in substantially constantly positioned distinct zones across the cross-section of the multicomponent filaments; the polymer components may form fibrils or protofibrils that start and end at random.

As used herein the terms "nonwoven web" or "nonwoven fabric" refer to a web having a structure of individual filaments or filaments that are interlaid, but not in an identifiable manner as in a knitted or woven fabric. Nonwoven fabrics or webs have been formed from many processes such as for example, meltblowing processes, spunbonding processes, airlaying processes, and carded web processes. The basis weight of nonwoven fabrics is usually expressed in grams per square meter (gsm) or ounces of material per square yard (osy) and the filament diameters useful are usually expressed in microns. (Note that to convert from osy to gsm, multiply osy by 33.91).

The terms "spunbond" or "spunbond nonwoven web" refer to a nonwoven fiber or filament material of small diameter filaments that are formed by extruding molten thermoplastic polymer as filaments from a plurality of capillaries of a spinneret. The extruded filaments are cooled while being drawn by an eductive or other well known drawing mechanism. The drawn filaments are deposited or laid onto a forming surface in a generally random manner to form a loosely entangled filament web, and then the laid filament web is subjected to a bonding process to impart physical integrity and dimensional stability. The production of spunbond fabrics is disclosed, for example, in U.S. Pat. Nos. 4,340,563 to Appel et al., 3,692,618 to Dorschner et al., and 3,802,817 to Matsuki et al.. Typically, spunbond fibers or filaments have a weight-per-unit-length in excess of about 1 denier and up to about 6 denier or higher, although both finer and heavier spunbond filaments can be produced. In terms of filament diameter, spunbond filaments often have an average diameter of larger than 7 microns, and more particularly between about 10 and about 25 microns, and up to about 30 microns or more.

As used herein the term "meltblown fibers" means fibers or microfibers formed by extruding a molten thermoplastic material through a plurality of fine, usually circular, die capillaries as molten threads or filaments or fibers into converging high velocity gas (e.g. air) streams that attenuate the fibers of molten thermoplastic material to reduce their diameter. Thereafter, the meltblown fibers are carried by the high velocity gas stream and are deposited on a collecting surface to form a web of randomly dispersed meltblown fibers. Such a process is disclosed, for example, in U.S. Pat. No. 3,849,241 to Buntin. Meltblown fibers may be continuous or discontinuous, are often smaller than 10 microns in average diameter and are frequently smaller than 7 or even 5 microns in average diameter, and are generally tacky when deposited onto a collecting surface.

As used herein "carded webs" refers to nonwoven webs formed by carding processes as are known to those skilled in the art and further described, for example, in coassigned U.S. Pat. No. 4,488,928 to Alikhan and Schmidt. Briefly, carding processes involve starting with staple fibers in a bulky batt that are separated, combed or otherwise treated and then deposited to provide a web of generally uniform basis weight.

As used herein, "thermal point bonding" involves passing a fabric or web of fibers or other sheet layer material to be bonded between a heated calender roll and an anvil roll. The calender roll is usually, though not always, patterned on its surface in some way so that the entire fabric is not bonded across its entire surface. As a result, various patterns for calender rolls have been developed for functional as well as aesthetic reasons. One example of a pattern has points and is the Hansen Pennings or "H&P" pattern with about a 30% bond area with about 200 bonds/square inch as taught in U.S. Pat. No. 3, 855,046 to Hansen and Pennings. The H&P pattern has square point or pin bonding areas wherein each pin has a side dimension of 0.038 inches (0.965 mm), a spacing of 0.070 inches (1.778 mm) between pins, and a depth of bonding of 0.023 inches (0.584 mm). The resulting pattern has a bonded area of about 29.5%. Another typical point bonding pattern is the expanded Hansen and Pennings or "EHP" bond pattern which produces a 15% bond area with a square pin having a side dimension of 0.037 inches (0.94 mm), a pin spacing of 0.097 inches (2.464 mm) and a depth of 0.039 inches (0.991 mm). Other common patterns include a high density diamond or "HDD pattern", which comprises point bonds having about 460 pins per square inch (about 71 pins per square centimeter) for a bond area of about 15% to about 23% and a wire weave pattern looking as the name suggests, e.g. like a window screen. Typically, the percent bonding area varies from around 10% to around 30% or more of the area of the fabric or web. Another known thermal calendering bonding method is the "pattern unbonded" or "point unbonded" or "PUB" bonding as taught in U.S. Patent 5,858,515 to Stokes et al., wherein continuous bonded areas define a plurality of discrete unbonded areas. Thermal bonding (point bonding or point-unbonding) imparts integrity to individual layers by bonding fibers within the layer and/or for laminates of multiple layers, such thermal bonding holds the layers together to form a cohesive laminate material.

As used herein the term "monolithic" is used to mean "non-porous", therefore a monolithic film is a non-porous film. Rather than holes produced by a physical processing of the monolithic film, the film has passages with cross-sectional sizes on a molecular scale formed by a polymerization process. The passages serve as conduits by which water molecules (or other liquid molecules) can disseminate through the film. Vapor transmission occurs through a monolithic film as a result of a concentration gradient - across the monolithic film. This process is referred to as activated diffusion. As water (or other liquid) evaporates on the body side of the film, the concentration of water vapor increases. The water vapor condenses and solubilizes on the surface of the body side of the film. As a liquid, the water molecules dissolve into the film. The water molecules then diffuse through the monolithic film and re-evaporate into the air on the side having a lower water vapor concentration.

As used herein, the term "microporous film" or "microporous filled film" means films which contain filler material which enables development or formation of micropores in the film during stretching or orientation of the film.

As used herein the term "filler" is meant to include particulates and other forms of materials that can be added to a film-forming polymer or blend of polymers and that will not chemically interfere with or adversely affect the extruded film but are able to be uniformly dispersed throughout the film. Generally, the fillers will be in particulate form and usually will have somewhat of a spherical shape with average particle sizes in the range of about 0.5 to about 8 microns. Generally, films utilizing a filler will usually contain about 30 percent to about 70 percent filler based upon the total weight of the film. Examples of fillers include calcium carbonate (CaCO3), various kinds of clay, silica (SiO2), alumina, barium sulfate, sodium carbonate, talc, magnesium sulfate, titanium dioxide, zeolites, aluminum sulfate, cellulose-type powders, diatomaceous earth, magnesium sulfate, magnesium carbonate, barium carbonate, kaolin, mica, carbon, calcium oxide, magnesium oxide, aluminum hydroxide, pulp powder, wood powder, cellulose derivative, polymer particles, chitin and chitin derivatives. The filler particles may optionally be coated with a fatty acid, such as stearic acid, which may facilitate the free flow of the particles (in bulk) and their ease of dispersion into the polymer matrix.

As used herein, the term "breathability" refers to the water vapor transmission rate (WVTR) of an area of fabric or material. Breathability is measured in grams of water per square meter per day (g/m2/24 hours). The WVTR of a material can be measured in accordance with ASTM Standard E96-80. Alternatively, for materials having WVTR greater than about 3000 g/m2/24 hours testing systems such as, for example, the PERMATRAN-W 100K water vapor permeation analysis system, commercially available from Modern Controls, Inc. (MOCON) of Minneapolis, Minnesota, may be used. Further, as used herein the term "breathable" refers to a fabric having a WVTR of at least 300 g/m2/24 hours.

### DETAILED DESCRIPTION OF THE INVENTION

The present invention provides an efficient, in-line process for forming elastic laminates comprising elastic blown film and one or more fibrous nonwoven webs. In embodiments, the process provides for elastic laminates having cross machine direction stretch and recovery, elastic laminates having machine direction stretch and recovery, and elastic laminates having both machine direction and cross machine direction stretch and recovery. The invention will be described with reference to the following description and Figures which illustrate certain embodiments. It will be apparent to those skilled in the art that these embodiments do not represent the full scope of the invention which is broadly applicable in the form of variations and equivalents as may be embraced by the claims appended hereto. Furthermore, features described or illustrated as part of one embodiment may be used with another embodiment to yield still a further embodiment. It is intended that the scope of the claims extend to all such variations and equivalents.

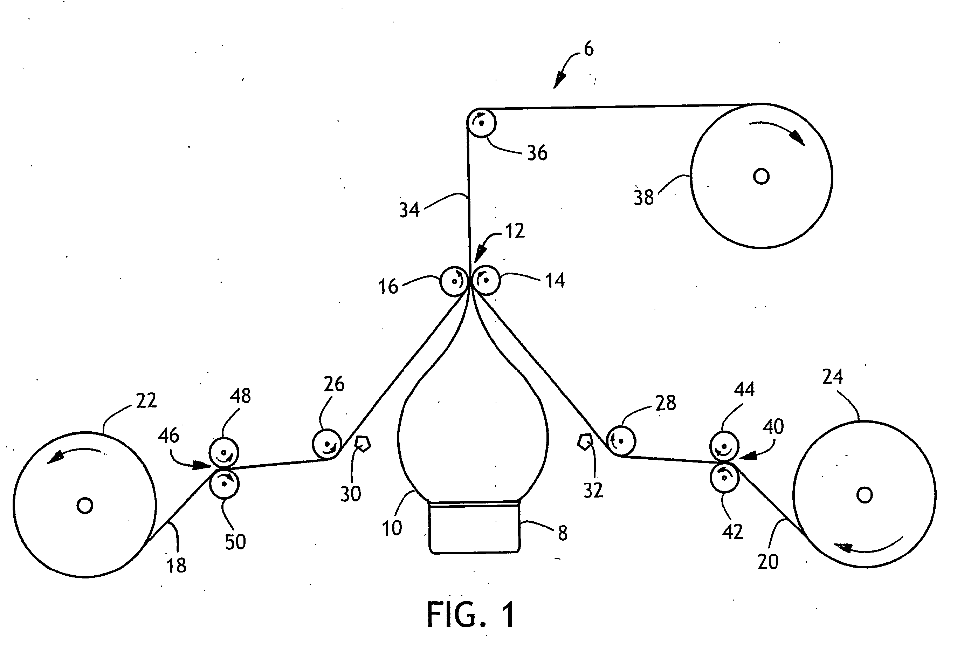

Turning to FIG. 1, there is depicted a schematic illustration of an embodiment of the process of the invention. As stated, the process forms laminates comprising elastic blown film and one or more fibrous nonwoven webs. As shown in FIG. 1, a process generally designated 6 comprises a blown film bubble 10 of thermoplastic polymer composition comprising elastic polymer that is extruded from an extruder (not shown) and then blown from an annular die 8 such as is known in the art for making blown films. The blown film bubble is directed to collapsing nip 12 formed between paired rollers 14 and 16. The collapsing nip 12 collapses the blown film bubble 10 by flattening it into a nascent film sheet. By "nascent", what is meant is that the flat film sheet is just-formed, or freshly formed into the film sheet from the blown film bubble. In addition, if the film is still in a molten or partially molten state, and/or if the paired rollers 14 and 16 are heated rollers, the compressive forces at the nip 12 will cause the two sides of the film bubble 10 to adhere to one another, forming essentially a single nascent film sheet. On the other hand, if an internal cooling gas is directed inside the bubble, or if sufficient time elapses between extrusion and collapse to allow the film to quench or cool in the ambient environment, and/or if the paired rollers 14 and 16 are chilled rollers, the two inner surface sides of the bubble 10 may not adhere to one another and the nascent film sheet may comprise two separable film layers or sheets. Such separable film layers may be separated by slitting along one side of the width extent of the collapsed film sheet and opening the film out to approximately double its collapsed width, or by slitting the collapsed film sheet along both sides and separating the two individual non-adhered elastic film layers.

Returning to FIG. 1, at least a first fibrous nonwoven web 18 is unwound from supply roll 22 and the fibrous nonwoven web 18 is directed by guide roller 26 to the collapsing nip 12 to contact a side surface of and be laminated to the nascent film sheet as the film sheet is collapsed from the bubble 10. In this regard, collapsing nip 12 also serves as a laminating nip. Where the film is still in a molten or partially molten state, and/or if the paired rollers 14 and 16 are heated rollers, the compressive forces at the nip 12 may cause the fibrous nonwoven web 18 to adhere directly to the film surface, bonding the film and the nonwoven web 18 together into a bi-laminate or bilayer material. On the other hand, where the film is not still in at least a partially molten state or where additional lamination bond strength is desired, the optional adhesive applicator 30 may be used to coat the surface or part of the surface of the fibrous nonwoven web 18 with an adhesive composition. Adhesive applicator 30 may be any suitable device as is known in the art, such as for example a melt spray adhesive applicator or a slot coat adhesive applicator.

After the fibrous nonwoven web 18 and the nascent film sheet have been formed into a laminate at the collapsing nip 12, the elastic laminate material 34 is directed by guide roller 36 to winding roll 38 to be wound up for storage. Alternatively, the elastic laminate material 34 may be directed to various converting or product forming operations without being wound and stored in roll form.

In another embodiment, it may be desirable to form a tri-laminate or trilayer material comprising a fibrous nonwoven web on each side of the elastic nascent film sheet. Continuing with FIG. 1, there is also shown the embodiment where second fibrous nonwoven web 20 is unwound from supply roll 24 and the second fibrous nonwoven web 20 is directed by guide roller 28 to the collapsing/lamination nip 12 to contact the side surface of the nascent film sheet opposite the side to which the first fibrous nonwoven web 18 was laminated. As mentioned above, if the film is not still in at least a partially molten state when the fibrous nonwoven webs are laminated to it or where additional lamination bond strength is desired, the optional adhesive applicator 32 may be used to coat the surface or part of the surface of the second fibrous nonwoven web 20 with an adhesive composition. It should also be noted that the process may be used to form either a double-width bi-laminate or bilayer material or two separate bi-laminate materials at the same time, where the blown film bubble is sufficiently quenched at the time it is collapsed in the collapsing nip 12 such that the two inner surface sides of the bubble 10 do not adhere to one another. As mentioned above, this may occur if an internal cooling gas is directed inside the bubble, or if sufficient time elapses between extrusion and collapse, and/or if the paired rollers 14 and 16 are chilled rollers. Such a material originally formed as a tri-laminate may then be slit or cut along one side and opened up for a double-width bi-laminate or slit along both sides and separated to form two individual sheets of bi-laminate material.

Such fibrous webs as are selected for use in the elastic laminate may be any fibrous layer capable of extension in at least one direction, such as nonwoven web materials, textile materials or knitted materials. However, for ease and speed of production and due to their relatively low cost, nonwoven web materials are highly suitable for use in forming the elastic laminate. Such fibrous nonwoven webs include, for example, spunbond webs, meltblown webs and carded webs. As stated, the fibrous nonwoven web selected should be capable of extension in at least one direction in an amount not less than the desired ability of the elastic laminate material to stretch and recover.

Particularly with respect to the embodiment depicted in FIG. 1, the fibrous nonwoven webs should have at least some amount of extensibility in the cross machine direction. If it is desired that the fibrous nonwoven web or webs supplied on rolls 22 or 24 have greater than as-supplied extensibility prior to lamination at collapsing nip 12, the optional incremental stretching nips 40 and 46 formed between paired grooved rollers 42, 44 and 48, 50 respectively, may be advantageously employed to impart a cross machine direction incremental extension to one or both of fibrous nonwoven webs 18 or 20. Grooved rollers for incremental stretching are well known in the art and will not be described herein in detail. Briefly, grooved rollers may be constructed from a series of spaced disks or rings mounted on a mandrel or axle, or may be a series of spaced circumferential peaks and grooves cut into the surface of a roller. A pair of matched grooved rollers are then brought together with the peaks of one roller fitting into the grooves of the other roller, and vice versa, to form a "nip", although it should be noted that there is no requirement for actual compressive contact as is the case for typical nipped rollers.

A sheet form material passed through such a roller arrangement is incrementally stretched or extended in the cross machine direction. After the material passes out of the grooved roller arrangement, if the material does not retract sufficiently or to the desired amount toward its original cross machine direction dimension or width, a machine direction drawing tension may be applied to cause it to further retract. Then, when the retracted material is laminated to the elastic film, it will be capable of cross machine direction extension approximately at least to the extent of the applied incremental stretching. When it is desired to incrementally stretch the fibrous nonwoven web or webs it may also be desired to apply heat to the webs just prior to the application of incremental stretch in order to cause the webs to relax somewhat and permit extension more easily. Heat may be applied to the webs by any suitable means as are known in the art such as for example heated air, infrared heaters, heated nipped rollers, or partial wrapping of the web around one or more heated rollers or steam canisters, etc. In addition, or alternatively, it may be desirable to apply heat to the grooved rollers themselves.

Polymers suitable for making the fibrous nonwoven webs to be used in the embodiments of the process described herein include those polymers known to be generally suitable for making nonwoven webs such as spunbond, meltblown, carded webs and the like, and include for example polyolefins, polyesters, polyamides, polycarbonates and copolymers and blends thereof. It should be noted that the polymer or polymers may desirably contain other additives such as processing aids or treatment compositions to impart desired properties to the fibers, residual amounts of solvents, pigments or colorants and the like.

Suitable polyolefins include polyethylene, e.g., high density polyethylene, medium density polyethylene, low density polyethylene and linear low density polyethylene; polypropylene, e.g., isotactic polypropylene, syndiotactic polypropylene, blends of isotactic polypropylene and atactic polypropylene; polybutylene, e.g., poly(1-butene) and poly(2-butene); polypentene, e.g., poly(1-pentene) and poly(2-pentene); poly(3-methyl-1-pentene); poly(4-methyl-1-pentene); and copolymers and blends thereof. Suitable copolymers include random and block copolymers prepared from two or more different unsaturated olefin monomers, such as ethylene/propylene and ethylene/butylene copolymers. Suitable polyamides include nylon 6, nylon 6/6, nylon 4/6, nylon 11, nylon 12, nylon 6/10, nylon 6/12, nylon 12/12, copolymers of caprolactam and alkylene oxide diamine, and the like, as well as blends and copolymers thereof. Suitable polyesters include poly(lactide) and poly(lactic acid) polymers as well as polyethylene terephthalate, polybutylene terephthalate, polytetramethylene terephthalate, polycyclohexylene-1,4-dimethylene terephthalate, and isophthalate copolymers thereof, as well as blends thereof.

Fibrous nonwoven webs formed from non-elastic polymers such as, for example, polyolefins are generally considered non-elastic, and also may not have desirable levels of extensibility. As mentioned above, low extensibility of the nonwoven web or webs may cause the resulting laminate material to be too restricted in its elastic properties. Therefore, care should be taken to use a fibrous nonwoven web which is at least somewhat extensible in the direction of desired stretch and recovery. As an example, carded webs of staple fibers as are known in the art are generally known to have considerably greater fiber orientation in the machine direction than in the cross machine direction. Because more of the fibers are aligned in the machine direction, the carded web tends to have more natural extensibility in the cross machine direction than in the machine direction. In addition, utilizing low basis weights for a fibrous nonwoven web selected for use in the process may allow for greater extensibility, whether such nonwoven web layer is a spunbond web, a meltblown web, a carded web, etc.

Where the fibrous nonwoven web or webs selected for use do not have sufficient cross machine direction extensibility, and where it is not desired to utilize an incremental stretching apparatus as was described in FIG. 1, the fibrous nonwoven web or webs may be supplied as "necked" nonwoven webs. A "necked" nonwoven web is one which has been elongated in one direction, usually the machine direction, causing rugosities to form across the web and, generally, causing the web to decrease its cross machine direction dimension. When such a necked nonwoven web is joined to the elastic film while the nonwoven web is in the necked or elongated condition, the nonwoven web (and the resulting laminate) is then able to be extended in the direction perpendicular to the direction of necking. As an alternative to supplying the fibrous nonwoven web as a roll of previously necked material, it is also acceptable to neck the material during the lamination process by driving the rollers 14 and 16 at a linear velocity which is greater than the rate at which the material is unwound from the supply roll 22 and/or 24. When necking during the process, it may be desirable to also utilize the optional nonwoven web heating means as were described above with respect to incremental stretching or grooved rolling. Necking of web materials is disclosed for example by U.S. Pat. Nos. 5,336,545, 5,226,992, 4,981,747 and 4,965,122 to Morman.

In addition, initial bonding of a fibrous nonwoven web (i.e., bonding to consolidate the nonwoven web itself rather than lamination bonding of a nonwoven web to the film sheet) may be performed by any method known to be suitable for bonding such nonwoven webs, such as for example by thermally point-bonding or spot-bonding the nonwoven web as described above. Alternatively, where the fibers are multicomponent fibers having component polymers with differing melting points, through-air bonders such as are well known to those skilled in the art may be advantageously utilized. Generally speaking, a through-air bonder directs a stream of heated air through the web of multicomponent fibers thereby forming inter-fiber bonds by desirably utilizing heated air having a temperature at or above the polymer melting temperature of a lower melting polymer component and below the melting temperature of a higher melting polymer component. As still other alternatives, a fibrous nonwoven web may be bonded by utilizing other means as are known in the art such as for example adhesive bonding, ultrasonic bonding or entanglement bonding such as hydroentangling or needling.

While the type of initial bonding utilized for a fibrous nonwoven web is not critical, where it is desired that the nonwoven have cross machine direction extensibility without being necked, it may be advantageous to use the least amount of bonding which allows for the nonwoven web to be transported to a point in the process where it is laminated with the nascent film sheet. As an example, the nonwoven web may be bonded with a point bonding method having a low percentage of bonded area. As another example, a nonwoven web may be very lightly consolidated by such as an air knife blowing heated air into and through the web of fibers, such as for example the hot air knife or "HAK" described in U.S. Pat. No. 5,707,468 to Arnold, et al..

As still another example, the nonwoven web may be bonded with a point bonding method wherein the arrangement of the bond elements or bonding "pins" are arranged such that the pin elements have a greater dimension in the machine direction than in the cross-machine direction. Linear or rectangular-shaped pin elements with the major axis aligned substantially in the machine direction are examples of this. Alternatively, or in addition, useful bonding patterns may have pin elements arranged so as to leave machine direction running "lanes" or lines of unbonded or substantially unbonded regions running in the machine direction, so that the nonwoven web material has additional give or extensibility in the cross machine direction. Such bonding patterns as are described in U.S. Pat. No. 5,620,779 to Levy and McCormack, may be useful, and in particular the "rib-knit" bonding pattern therein described.

The characteristics or physical properties of fibrous nonwoven webs are controlled, at least in part, by the density or openness of the fabric. Generally speaking, fibrous nonwoven webs made from crimped filaments or fibers have a lower density, higher loft and improved resiliency compared to similar nonwoven webs of uncrimped filaments. Such a lofty, low density fibrous nonwoven web layer may be particularly desirable for use in skin-contacting applications to provide a more cloth-like texture to the elastic laminate.

In addition, crimped fibers may also assist the extensibility of the fibrous nonwoven web or webs. Those crimped fibers in the nonwoven web which have a primary orientation in the direction of desired extensibility (or those portions of the fibers having primary orientation in the direction of desired extensibility) may be allowed to "give" or extend somewhat more via a straightening out of the crimps in the fibers. Various methods of crimping melt-spun multicomponent filaments are known in the art. As disclosed in U.S. Pat. Nos. 3,595,731 and 3,423,266 to Davies et al., bicomponent fibers or filaments may be mechanically crimped and the resultant fibers formed into a nonwoven web or, if the appropriate polymers are used, a latent helical crimp produced in bicomponent fibers or filaments may be activated by heat treatment of the formed web. Alternatively, as disclosed in U.S. Patent No. 5,382,400 to Pike et al., incorporated herein by reference in its entirety, the heat treatment may be used to activate the latent helical crimp in the fibers or filaments before the fibers or filaments have been formed into a nonwoven web. As an alternative to bicomponent fibers, fiber crimp may be produced in homofilament fibers (fibers having one polymer component) by utilizing the teachings disclosed in U.S. Pat. No. 6,632,386 to Shelley and Brown, U.S. Pat. No. 6,446,691 to Maldonado et al. and U.S. Pat. No. 6,619,947 to Pike et al..

Generally speaking, the basis weight of the fibrous nonwoven web or webs may suitably be from about 7 gsm or less up to 100 gsm or more, and more particularly may have a basis weight from about 10 gsm or less to about 68 gsm, and still more particularly, from about 14 gsm to about 34 gsm. Other examples are possible.

It should further be noted that either or both of the fibrous nonwoven webs provided to the laminate may themselves be multi-layer structures. Particular examples of multilayer laminate construction for the fibrous nonwoven web or webs includes spunbond-meltblown-spunbond laminates such as are described in U.S. Pat. Nos. 4,041,203 and 4,766,029 to Brock et al., 5,464,688 to Timmons et al. and 5,169,706 to Collier et al.. As another example, where a spunbond fibrous nonwoven web is selected for use in the elastic laminate, the spunbond web itself may be produced on a multiple spin bank machine where a subsequent spin bank deposits fibers atop a layer of just-deposited fibers from a previous spin bank, and so in this regard such an individual spunbond nonwoven web may be thought of as a multi-layered structure. In this situation, the various layers of deposited fibers in the fibrous nonwoven web may be the same, or they may be different in basis weight and/or in terms of the composition, type, size, level of crimp, and/or shape of the fibers produced. As another example, a single fibrous nonwoven web may be provided as two or more individually produced layers of a spunbond web, a carded web, etc. which have been bonded together to form the fibrous nonwoven web, and these individually produced layers may differ in terms of production method, basis weight, composition, and fibers as discussed above.

As stated above, the elastic film sheet is extruded as a blown film. Blown films are well known in the art and will not be discussed herein in detail. Briefly, the production of a blown film involves use of a gas, such as air, to expand a bubble of molten extruded polymer after the molten polymer has been extruded from an annular die. Processes for producing blown films are taught in, for example, U.S. Pat. No. 3,354,506 to Raley, U.S. Pat. No. 3,650,649 to Schippers and U.S. Pat. No. 3,801,429 to Schrenk et al.. It should be noted that the blow up ratio (the ratio of the circumference of the blown up film to the circumference of the inner circle of the film die) can be controlled by the amount of polymer extruded and by the amount of gas used to expand the bubble. By controlling the blow up ratio to match the width of the collapsed film sheet to the width of the available fibrous nonwoven web to be laminated, overlaps of one material past the width extent of the other, and thus associated trim waste, can be sharply reduced or even virtually eliminated. In addition, or alternatively, the width of the collapsed film sheet may be matched to suit both the available fibrous nonwoven web and the desired width of elastic laminate material which is to be used in a final product configuration, thereby reducing the waste that often occurs when the elastic laminate itself must be trimmed to fit in the final product.

In general, the elastic film sheet in the final nonwoven-film laminate material may have a basis weight of from about 5 gsm or less to about 100 gsm or greater. More desirably, the elastic film sheet may have a basis weight from about 5 gsm to about 68 gsm, and still more desirably from about 5 gsm to about 34 gsm. Because elastic materials are often expensive to produce, the elastic film sheet is desirably of as low basis weight as is possible while still providing the desired properties of stretch and recovery to the elastic laminate material.

Many elastomeric polymers are known to be suitable for forming fibers, foams and films. Thermoplastic polymer compositions useful for forming the elastic blown film may desirably comprise any elastic polymer or polymers known to be suitable elastomeric fiber or film forming resins including, for example, elastic polyesters, elastic polyurethanes, elastic polyamides, elastic co-polymers of ethylene and at least one vinyl monomer, block copolymers, and elastic polyolefins. Examples of elastic block copolymers include those having the general formula A-B-A' or A-B, where A and A' are each a thermoplastic polymer endblock that contains a styrenic moiety such as a poly (vinyl arene) and where B is an elastomeric polymer midblock such as a conjugated diene or a lower alkene polymer such as for example polystyrene-poly(ethylene-butylene)-polystyrene block copolymers. Also included are polymers composed of an A-B-A-B tetrablock copolymer, as discussed in U.S. Pat. No. 5,332,613 to Taylor et al. An example of such a tetrablock copolymer is a styrene-poly(ethylene-propylene)-styrene-poly(ethylene-propylene) or SEPSEP block copolymer. These A-B-A' and A-B-A-B copolymers are available in several different formulations from the Kraton Polymers of Houston, Texas under the trade designation KRATON®. Other commercially available block copolymers include the SEPS or styrene-poly(ethylene-propylene)-styrene elastic copolymer available from Kuraray Company, Ltd. of Okayama, Japan, under the trade name SEXTON®.

Examples of elastic polyolefins include ultra-low density elastic polypropylenes and polyethylenes, such as those produced by "single-site" or "metallocene" catalysis methods. Such polymers are commercially available from the Dow Chemical Company of Midland, Michigan under the trade name ENGAGE®, and described in U.S. Pat. Nos. 5,278,272 and 5,272,236 to Lai et al. entitled "Elastic Substantially Linear Olefin Polymers". Also useful are certain elastomeric polypropylenes such as are described, for example, in U.S. Pat. No. 5,539,056 to Yang et al. and U.S. Pat. No. 5,596,052 to Resconi et al., and polyethylenes such as AFFINITY® EG 8200 from Dow Chemical of Midland, Michigan as well as EXACT® 4049, 4011 and 4041 from Exxon of Houston, Texas, as well as blends.

Film layers or sheets, including elastic film layers, generally act as a barrier to the passage of liquids, vapors and gases. However, it may be desirable for the elastic film sheet layer to be breathable, that is, allow the passage of water vapor and/or gases. An elastic film sheet layer which is also breathable may provide increased in-use comfort to a wearer by allowing passage of water vapor and assist in reducing excessive skin hydration, and help to provide a more cool feeling. Therefore, where a breathable elastic laminate material is desired the thermoplastic elastic material used may be a breathable monolithic or microporous barrier film which acts as a barrier to passage of aqueous liquids, yet allows the passage of water vapor and air or other gases. Monolithic breathable films can exhibit good breathability when they comprise polymers which inherently have good water vapor transmission or diffusion rates such as, for example, polyurethanes, polyether esters, polyether amides, EMA, EEA, EVA and the like. Examples of elastic breathable monolithic films are described in U.S. Pat. No. 6,245,401 to Ying et al. and include those comprising polymers such as thermoplastic (ether or ester) polyurethane, polyether block amides, and polyether esters.

As stated, microporous elastic films may also be used where a breathable elastic laminate material is desired. Microporous breathable films contain a filler material, such as for example calcium carbonate particles, in an amount usually from about 30 percent to 70 percent by weight of the film. The filler-containing film (or "filled film") is then stretched or oriented to open micro-voids around the filler particles in the film, which micro-voids allow for the passage of air and water vapor through the film. Breathable microporous elastic films containing fillers are described in, for example, Pat. Nos. 6,015,764 and 6,111,163 to McCormack and Haffner, U.S. Pat. No. 5,932,497 to Morman and Milicevic, and in U.S. Pat. No. 6,461,457 to Taylor and Martin. Other breathable films having bonding agents are disclosed in U.S. Pat. Nos. 5,855,999 and 5,695,868 to McCormack, both incorporated herein by reference in their entireties. In addition, multilayer breathable films as are disclosed in U.S. Pat. No. 5,997,981 to McCormack et al., incorporated herein by reference in its entirety, may be useful. Still other suitable breathable films and film compositions are disclosed in coassigned U.S. Patent Application Serial No. 10/646,978 to McCormack and Shawver, filed August 22, 2003 and entitled "Microporous Breathable Elastic Films, Methods Of Making Same, And Limited Use Or Disposable Product Applications".

In yet another embodiment of the invention, a cellular elastic film may be used to provide breathability where a breathable elastic laminate material is desired. Breathable cellular elastic film may be produced by mixing the elastic polymer resin with a cell opening agent which decomposes or reacts to release a gas that forms cells in the elastic film. The cell opening agent can be an azodicarbonamide, fluorocarbons, low boiling point solvents such as for example methylene chloride, water, or other agents such as are known to those skilled in the art to be cell opening or blowing agents which will create a vapor at the temperature experienced in the film die extrusion process. Cellular elastic films are described in PCT App. No. PCT/US99/31045 (WO 00/39201 published July 06, 2000) to Thomas et al..

As another example, it may be desirable to provide breathability to the laminate in circumstances where barrier properties are not particularly important or not desired. In such circumstances, either the elastic film sheet itself or the entire elastic laminate may be apertured or perforated to provide a laminate capable of allowing the passage of vapors or gases. Such perforations or apertures may be performed by methods known in the art such as for example slit aperturing or pin aperturing with heated or ambient temperature pins.

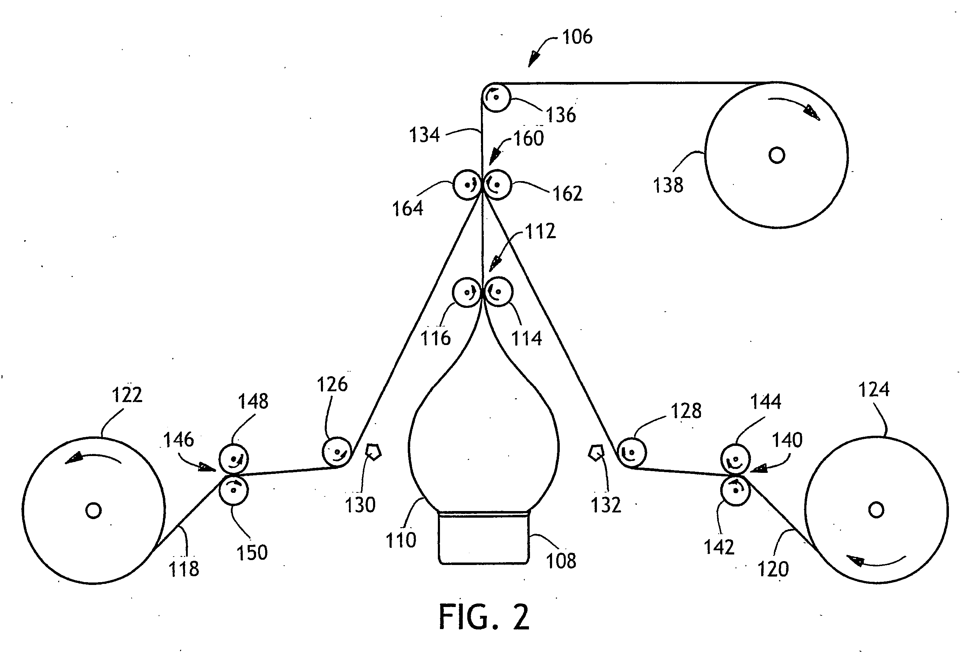

Turning to FIG. 2, there is shown schematically illustrated another embodiment of the process of the invention which is capable of producing bilayer or trilayer nonwoven/blown film elastic laminates having either cross machine direction elastic properties or machine direction elastic properties, or cross machine direction and machine direction elastic properties. The embodiment of the process in FIG. 2, generally designated 106, is very similar to the embodiment illustrated in FIG.1, except that the process 106 is capable, if desired, of directing the fibrous nonwoven web or webs along different paths than in FIG. 1, resulting in first contact of the fibrous nonwoven web or webs to the side or sides of the elastic film sheet at a point in the process after the collapsed film sheet has exited the collapsing nip 112. However, if desired, the process illustrated in FIG. 2 may be utilized to make a cross machine direction extensible elastic laminate material as was discussed above with respect to FIG. 1. That is, one or both fibrous nonwoven webs 118, 120 may be unwound from supply rolls 122, 124 and guided around guide rollers 126, 128 to be laminated to the side or sides of the nascent film sheet at collapsing nip 112 defined between rollers 114, 116 as the blown film bubble 110 is collapsed in collapsing nip 112.

However, the process 106 may also be utilized to form machine direction extensible elastic laminate materials. When it is desired to make elastic laminates having machine direction stretch and recovery, the first fibrous nonwoven web 118 and/or second fibrous nonwoven web 120 may be directed past the collapsing nip 112 to be laminated to the elastic film sheet at a second nip 160 formed between rollers 162 and 164. Rollers 114 and 116 are driven at a first velocity, and rollers 162 and 164 are driven at a second velocity. When the second velocity is greater than the first velocity, the collapsed elastic film sheet will experience a machine direction tension force as it travels through collapsing nip 112 and second nip 160.

This machine direction tension force will cause the elastic film sheet to be stretched or elongated in the machine direction. Because the film sheet is elastic, when the tension is removed or relaxed the film will retract toward its original machine direction length. When the film retracts or becomes shorter in the machine direction, first fibrous nonwoven web 118 and/or second fibrous nonwoven web 120 which are bonded to the side or sides of the elastic film will buckle or form gathers. The resulting elastic laminate material is stretchable in the machine direction to the extent that the gathers or buckles in the fibrous nonwoven web or webs can be pulled back out flat and allow the elastic film to elongate. The elastic laminate material 134 is then directed around guide roller 136 to winding roll 138 to be wound up for storage, or may instead be directed to various converting or product forming operations without being wound and stored in roll form. It should be noted that where it is desired to produce an elastic laminate material having only machine direction stretch and recovery that no particular care need be exercised with respect to selecting or producing web materials having cross machine direction extensibility.

In addition, the process depicted in FIG. 2 may be used to produce elastic laminate materials having both machine direction and cross machine direction stretch and recovery properties. When the first and/or second fibrous nonwoven webs supplied to the process are inherently extensible in the cross machine direction or treated to become more extensible in the cross machine direction, the resulting laminate will have the machine direction stretch via the gathering technique described immediately above and have cross machine direction stretch due to the cross machine direction extensibility of the nonwoven webs. As was described with respect to FIG. 1, the fibrous nonwoven web or webs may be provided as rolls of previously necked material, or may be necked in-line via a machine direction drawing tension supplied by nip 160 where rollers 162 and 164 are driven at a linear velocity greater than the rate at which the nonwoven web or webs are unwound from the supply rolls. Also as was described with respect to FIG. 1, the process 106 in FIG. 2 may optionally include incremental stretching nips 140 and 146 formed between paired grooved rollers 142, 144 and 148, 150 respectively, which may be used to impart a cross machine direction incremental extension to one or both of fibrous nonwoven webs 118 or 120. For either in-line necking or in-line incremental stretching, it may further be desired to supply heat to the fibrous nonwoven webs to relax the web and assist in necking or incremental stretching, as was described above.

The process shown in FIG. 2 further includes adhesive applicators 130 and 132 that may be used to coat the surface or part of the surface of the first fibrous nonwoven web 118 and/or second fibrous nonwoven web 120 with an adhesive composition to assist with bonding lamination of the fibrous web or webs to the elastic film sheet. As described above, adhesive applicators 130 and 132 may be any suitable devices as are known in the art, such as for example a melt spray adhesive applicator or a slot coat adhesive applicator. Alternatively, the fibrous nonwoven web or webs may be laminate bonded to the elastic film sheet by utilizing heated rolls 162, 164 at nip 160, and/or by using additional heated pattern engraved or point bonding means as are known in the art.

As was described above with respect to FIG. 1, where the blown film bubble 110 is sufficiently quenched or cooled that the inner surface sides of the collapsed film sheet do not adhere to one another when the bubble is collapsed into a nascent film sheet in nip 112, either a double-width of bi-laminate material or two individual sheets of a bi-laminate material may be produced during a single pass operation of a laminate material formed initially as a tri-laminate.

Another benefit to the process described in FIG. 2, in addition to machine direction stretch and recovery, concerns breathability. Where it is desired to have a breathable elastic laminate, and the thermoplastic polymer composition for the blown film comprises a filled elastic polymer in order to form a microporous elastic film, the amount of stretching provided to the film bubble during the blowing process may not be sufficient to enable desired levels of breathability in the final elastic laminate material. This may be particularly so because the majority of the blow up ratio that occurs during the blowing process is the result of molten polymer flow rather than stretching of a quenched (i.e. cooled or no longer molten) polymer. However, in the embodiment described above with respect to FIG. 2 wherein the second velocity (at second nip 160) is greater than the first velocity (at the collapsing nip 112), the collapsed elastic film sheet will experience a machine direction tension force as it travels through collapsing nip 112 and second nip 160. This tension force results in stretching of the elastic film after the film is substantially quenched or cooled and may promote additional pore formation around the filler particles or increased pore size to previously formed pores, thereby increasing breathability of the elastic film sheet and the resulting laminate.

While not shown here, various additional potential processing and/or finishing steps known in the art such as slitting, treating, aperturing, printing graphics, or further lamination of the elastic laminate into a composite with other materials, such as other films or other nonwoven layers, may be performed without departing from the spirit and scope of the invention. General examples of web material treatments include electret treatment to induce a permanent electrostatic charge in the web, or in the alternative antistatic treatments, or one or more treatments to impart wettability or hydrophilicity to a web comprising hydrophobic thermoplastic material. Wettability treatment additives may be incorporated into the polymer melt as an internal treatment, or may be added topically at some point following fiber or web formation. Still another example of web treatment includes treatment to impart repellency to low surface energy liquids such as alcohols, aldehydes and ketones. Examples of such liquid repellency treatments include fluorocarbon compounds added to the web or fibers of the web either topically or by adding the fluorocarbon compounds internally to the thermoplastic melt from which the fibers are extruded.

As another example of an additional processing or finishing step, the elastic laminate material itself may be subjected to stretching in either the machine direction or cross machine direction, or both, such as by machine direction tensioning, tenter frames, or grooved rolling, in order to impart additional levels of extensibility or to impart greater breathability where the elastic polymer composition comprises a filled film composition. As still another example, it may be desirable to add a temperature controlled section to the process embodiments described above, at some point in the process after the film bubble is collapsed and/or after the fibrous nonwoven web(s) are laminated to the elastic film, to retract and/or heat anneal and/or chill the elastic laminate material to help control and set a desired level of retraction in the finished elastic laminate.

As another example of an alternative embodiment, the fibrous nonwoven web or webs need not necessarily be supplied to the elastic laminate formation process as previously produced and roll-wound webs. Instead, the fibrous nonwoven web or webs may be produced at an adjacent spunbonding, meltblowing or carding operation and directed immediately as a just-produced fibrous nonwoven web for lamination into the elastic laminate material production process. As another example, although the fibrous nonwoven webs were described herein as webs produced from non-elastic polymers, this is not required, and suitable fibrous nonwoven webs may also be produced using one or more elastic polymers, and/or blends of elastic and non-elastic polymers.

### EXAMPLES

### Example 1:

As a specific example of an embodiment of the foregoing process for producing elastic laminates, a trilayer elastic laminate having cross machine direction stretch and recovery could be produced in the following manner. The fibrous nonwoven webs may be necked polypropylene spunbond having a basis weight of about 34 gsm in the necked conformation and be supplied on rolls to a process such as the one depicted in FIG. 1. The fibrous nonwoven webs may be polypropylene spunbond nonwoven webs made substantially in accordance with the teachings of U.S. Pat. No. 4,340,563 to Appel et al., for example, which are then necked by stretching in the machine direction substantially in accordance with the teachings of necked webs as in U.S. Pat. Nos. 5,336,545, 5,226,992, 4,981,747 or 4,965,122 to Morman, and rolled up on rolls to be unwound during the lamination process. The fibrous nonwoven webs may be supplied as about 19 inch wide (about 48.3 centimeters) wide spunbond webs to make an elastic laminate having a width of about 19 inches (about 48.3 centimeters).

The elastic film may be blown by delivering pelletized elastic block copolymer such as a polystyrene-poly(ethylene-butylene)-polystyrene or SEBS block copolymer available from Kraton Polymers of Houston, Texas under the trade designation KRATON® 1657G to a blown film line. Desirably, such a SEBS elastic polymer may be blended with one or more polyolefins and/or tackifiers to improve processability and/or to enhance desired properties of the final form of the film. Exemplary blends of elastic polymers with polyolefins and tackifiers are disclosed in U.S. Pat. No. 4,789,699 to Kieffer and Wisneski.

An exemplary blown film line is available from Davis-Standard of Pawcatuck, Connecticut and sold as Killion Blown Film line in dedicated configuration (polymer extruder, 3 inch (7.62 centimeter) diameter annular film die, and blowing apparatus). The elastic polymer composition or elastic polymer blend composition may be heated to about 200 °C and extruded to the annular film die at a rate of about 175 pounds per hour (about 79.4 kilograms per hour). The molten elastic film composition extruded from the annular die may then be blown by supplying air at ambient temperatures in order to blow the film bubble up to a blow up ratio of about 4 before collapsing the film bubble. The film bubble may then be collapsed in a collapsing nip to form a nascent film sheet having a width of about 19 inches (about 48.3 centimeters) and a basis weight of approximately 30 gsm.

The two fibrous nonwoven webs may be unwound from their supply rolls at a rate of about 300 feet per minute (about 91.4 meters per minute) and fed into the collapsing nip as the as the blown film bubble enters the collapsing nip such that one nonwoven web is pressed against each side surface of the nascent film sheet to form a tri-laminate material. Desirably, the rollers forming the collapsing nip are heated rollers to assist in bonding the fibrous nonwoven webs to the nascent film sheet. Thereafter, the cross machine direction elastic laminate material may be taken up on a winding roll. A sample of such a cross machine direction elastic laminate should be capable of being extended in the cross machine direction to at least about 133% of its width, and after release of extension tension should recover or retract at least about 50% of the amount of the extension.

### Example 2:

As another specific example of an embodiment of the foregoing process for producing elastic laminates, a trilayer elastic laminate having both cross machine direction and machine direction stretch and recovery could be produced in the following manner. The fibrous nonwoven webs and elastic film composition, and blowing of the elastic film bubble may be as described above with respect to Example 1, with the following differences. The fibrous nonwoven webs may be supplied as about 16 inch (about 40.6 centimeters) wide spunbond webs. Also, rather than joining the fibrous nonwoven webs to the nascent film at the collapsing nip, one of each of the fibrous nonwoven webs is first pressed against a side surface of the film sheet at a second nip at a point in the process after the nascent film sheet is collapsed from the blown film bubble in the collapsing nip, such as is illustrated by the process shown in FIG. 2.

In order to assist with the bonding of the fibrous nonwoven webs to the film sheet, the fibrous nonwoven webs may desirably have an adhesive applied to one side surface prior to that surface contacting the film sheet. The adhesive may desirably be such as the REXTAC® adhesive polymers available from Huntsman Polymers of Houston, Texas and such adhesive application may desirably be performed by a slot coat adhesive system such as the BC-62 Porous Coat model available from the Nordson Corporation of Dawsonville, Georgia.

To form machine direction extensibility, the fibrous nonwoven web supply rolls and the rollers of the second nip may all be driven at about 300 feet per minute (about 91.4 meters per minute), while the collapsing nip rollers are driven at a rate of about 225 feet per minute (about 68.6 meters per minute), or less. By driving the collapsing nip at a linear rate of speed which is lower than the second nip, the elastic film sheet will be extended in the machine direction at the time the fibrous nonwoven webs are bonded to it in the second nip. It is also expected that the elastic film sheet will neck in (become more narrow in the cross machine direction) during the machine direction extension, for example by narrowing from about 19 inches (about 48.3 centimeters) in width to about 16 inches in width (about 40.6 centimeters).

After the tri-laminate elastic material exits the second nip it may be directed to a winding roll to be taken up for storage. Desirably, the winding roll take up speed may be slower than that of the second nip, for example at about 225 feet per minute (about 68.6 meters per minute), to allow the elastic film to retract in the machine direction and gather the fibrous nonwoven webs. A sample of such a cross machine direction and machine direction elastic laminate should be capable of being extended in either or both of the machine direction and cross machine direction to at least about 133% of its length or width, and after release of extension tension should recover or retract at least about 50% of the amount of the extension.

The elastic laminates formed by the process embodiments described herein are highly suited for use in medical care products, protective wear garments, mortuary and veterinary products, and personal care products. Examples of such products include, but are not limited to, medical and health care products such as surgical drapes, gowns and bandages, protective workwear garments such as coveralls and lab coats, and infant, child and adult personal care absorbent products such as diapers, training pants, incontinence garments and pads, sanitary napkins, wipes and the like.

The process is multi-capable and in embodiments can form elastic laminates having the properties of stretch and recovery in the cross machine direction, the machine direction, or in both the machine and cross machine directions. Also, because the film blow up ratio can be controlled to produce a width of elastic film closely suiting the width of available fibrous nonwoven web or webs to be laminated, and/or closely suiting the desired width of elastic laminate material to be used in a final product, waste in the form of edge trim of laminate components and/or trim of the laminate itself is greatly reduced. In addition, the process described herein is highly advantageous because it requires very little in-process equipment contact with the formed elastic film sheet and thereby reduces film sheet handling to a minimum because the film sheet is laminated to one or more fibrous nonwoven webs just as it is formed or shortly after it is formed.

## Claims

1. A process for forming elastic film nonwoven laminates comprising:
extruding a thermoplastic polymer composition comprising elastic polymer; blowing said extruded thermoplastic polymer composition to form a blown film bubble; directing said bubble to a first nip formed between a pair of rollers to collapse said bubble into a nascent film sheet; providing at least a first fibrous nonwoven web; and directing said at least a first fibrous nonwoven web to said nip to contact a side of said nascent film sheet to form a laminate comprising said film sheet and said at least first fibrous nonwoven web.

2. A process for forming elastic film nonwoven laminates comprising:
extruding a thermoplastic polymer composition comprising elastic polymer; blowing said extruded thermoplastic polymer composition to form a blown film bubble; directing said bubble to a first nip formed between a first pair of rollers to collapse said bubble into a film sheet, said first pair rollers rotating at a first velocity; directing said film sheet to a second nip formed between a second pair of rollers rotating at a second velocity; providing at least a first fibrous nonwoven web; directing said at least first fibrous nonwoven web to one of said first nip or said second nip to contact a side of said film sheet to form a laminate comprising said film sheet and said at least first fibrous nonwoven web.

3. The process of claim 1 or 2 further comprising providing a second fibrous nonwoven web and directing said second fibrous nonwoven web to contact a side of said film sheet opposite the side contacted by said first fibrous nonwoven web to form a laminate comprising said film sheet having at least one fibrous nonwoven web on each side.

4. The process of claim 1 wherein said first nip operates at a linear velocity greater than the linear velocity at which said at least one fibrous nonwoven web is provided.

5. The process of claim 1 or 2 wherein said film sheet is in an at least partially molten state when said film sheet is contacted by said first fibrous nonwoven web.

6. The process of claim 3 wherein said film sheet is in an at least partially molten state when said film sheet is contacted by said first and said second fibrous nonwoven webs.

7. The process of claim 2 wherein said film sheet is contacted by said first fibrous nonwoven web at said second nip and further wherein said second velocity is greater than said first velocity.

8. The process of claim 1 or 2 further comprising the step of applying an adhesive to said at least first fibrous nonwoven web prior to contacting said film sheet with said at least first fibrous nonwoven web.

9. The process of claim 1 or 2 further comprising the steps of providing at least one pair of grooved rollers and incrementally stretching said at least first fibrous nonwoven web prior to contacting said film sheet with said at least fibrous nonwoven web.

10. The process of claim 3 further comprising the steps of providing at least two pairs of grooved rollers and incrementally stretching said first and second fibrous nonwoven webs prior to contacting said film sheet with said first and second fibrous nonwoven webs.

11. The process of claim 1 or 2 wherein said at least first fibrous nonwoven web is provided in a necked condition.

12. The process of claim 3 wherein said first and second fibrous nonwoven webs are provided in a necked condition.

13. The process of claim 1 or 2 further comprising the steps of providing an additional nip and bonding said laminate in said additional nip, said bonding selected from the group of thermal bonding and ultrasonic bonding.

14. An elastic laminate formed from the process of claim 1 or 2.

15. The elastic laminate of claim 13, wherein said elastic laminate is elastic in the machine direction and cross machine direction.

16. The elastic laminate of claim 13, wherein said elastic laminate is breathable.

17. An elastic laminate formed from the process of claim 3.

18. The elastic laminate of claim 17, wherein said elastic laminate is elastic in the machine direction and cross machine direction.

19. The elastic laminate of claim 17, wherein said elastic laminate is breathable.

## Patentansprüche

1. Ein Verfahren zum Bilden von Vlies-Laminaten aus elastischen Schichten, wobei das Verfahren umfasst:
Extrudieren einer thermoplastischen Polymermischung, die elastisches Polymer umfasst; Blasen der extrudierten thermoplastischen Polymermischung, um eine Blasfolienblase zu bilden; Zuführen der Blase zu einem ersten Walzenspalt, der zwischen einem Paar Walzen gebildet wird, um die Blase in eine entstehende Schichtfolie zusammenzulegen; Bereitstellen mindestens einer ersten fibrösen Vliesbahn; und Zuführen der mindestens einen ersten fibrösen Vliesbahn zu dem Walzspalt, um eine Seite der entstehenden Schichtfolie zu berühren, um ein Laminat zu bilden, das die Schichtfolie und die mindestens erste fibröse Vliesbahn umfasst.

2. Ein Verfahren zum Bilden von Vlies-Laminaten aus elastischen Schichten, wobei das Verfahren umfasst:
Extrudieren einer thermoplastischen Polymermischung, die elastisches Polymer umfasst; Blasen der extrudierten thermoplastischen Polymermischung, um eine Blasfolienblase zu bilden; Zuführen der Blase zu einem ersten Walzenspalt, der zwischen einem ersten Paar Walzen gebildet wird, um die Blase in eine Schichtfolie zusammenzulegen, wobei das erste Paar Walzen mit einer ersten Geschwindigkeit rotiert; Zuführen der Schichtfolie zu einem zweiten Walzspalt, der zwischen einem zweiten Paar Walzen gebildet wird, das mit einer zweiten Geschwindigkeit rotiert; Bereitstellen mindestens einer ersten fibrösen Vliesbahn; Zuführen der mindestens ersten fibrösen Vliesbahn zu einem des ersten Walzspalts oder des zweiten Walzspalts, um eine Seite der Schichtfolie zu berühren, um ein Laminat zu bilden, das die Schichtfolie und die mindestens erste fibröse Vliesbahn umfasst.

3. Das Verfahren nach Anspruch 1 oder 2 weiter umfassend das Bereitstellen einer zweiten fibrösen Vliesbahn und das Zuführen der zweiten fibrösen Vliesbahn, um eine Seite der Schichtfolie zu berühren, die gegenüber der Seite ist, die die erste fibröse Vliesbahn berührt, um ein Laminat zu bilden, wobei das Laminat die Schichtfolie umfasst, und die Schichtfolie mindestens eine fibröses Vliesbahn auf jeder Seite hat.

4. Das Verfahren nach Anspruch 1, wobei der erste Walzenspalt mit einer linearen Geschwindigkeit betrieben wird, die höher als die lineare Geschwindigkeit ist, bei der die erste fibröse Vliesbahn bereitgestellt wird.

5. Das Verfahren nach Anspruch 1 oder 2, wobei sich die Schichtfolie in einem zumindest teilweise geschmolzenen Zustand befindet, wenn die erste fibröse Vliesbahn die Schichtfolie berührt.

6. Das Verfahren nach Anspruch 3, wobei sich die Schichtfolie in einem zumindest teilweise geschmolzenen Zustand befindet, wenn die erste und die zweite fibröse Vliesbahn die Schichtfolie berührt.

7. Das Verfahren nach Anspruch 2, wobei die erste fibröse Vliesbahn die Schichtfolie an dem zweiten Walzenspalt berührt, und wobei weiter die zweite Geschwindigkeit größer als die erste Geschwindigkeit ist.

8. Das Verfahren nach Anspruch 1 oder 2 weiter umfassend den Schritt des Applizierens eines Klebstoffes auf die erste fibröse Vliesbahn vor dem Berühren der Schichtfolie mit der mindestens ersten fibrösen Vliesbahn.

9. Das Verfahren nach Anspruch 1 oder 2 weiter umfassend die Schritte des Bereitstellens mindestens eines Paars gerillter Walzen und des zunehmenden Dehnens der mindestens ersten fibrösen Vliesbahn vor dem Berühren der Schichtfolie mit der mindestens fibrösen Vliesbahn.

10. Das Verfahren nach Anspruch 3 weiter umfassend die Schritte des Bereitstellens von mindestens zwei Paaren gerillter Walzen und des zunehmenden Dehnens der ersten und zweiten fibrösen Vliesbahn vor dem Berühren der Schichtfolie mit der ersten und zweiten fibrösen Vliesbahn.

11. Das Verfahren nach Anspruch 1 oder 2, wobei die mindestens erste Vliesbahn in einem gestreckten Zustand bereitgestellt wird.

12. Das Verfahren nach Anspruch 3, wobei die erste und das zweite Vliesbahn in einem gestreckten Zustand bereitgestellt werden.

13. Das Verfahren nach Anspruch 1 oder 2 weiter umfassend die Schritte des Bereitstellens eines zusätzlichen Walzspalts und des Verbindens des Laminats in dem zusätzlichen Walzspalt, wobei das Aushärten aus der Gruppe von thermischen Verbinden und Ultraschallverbinden ausgesucht wird.

14. Ein elastisches Laminat das durch das Verfahren nach Anspruch 1 oder 2 gebildet wird.

15. Das elastische Laminat nach Anspruch 13, wobei das elastische Laminat in Richtung der Maschine und quer zur Richtung der Maschine elastisch ist.

16. Das elastische Laminat nach Anspruch 13, wobei das elastische Laminat luftdurchlässig ist.

17. Ein elastisches Laminat, das durch das Verfahren nach Anspruch 3 gebildet wird.

18. Das elastische Laminat nach Anspruch 17, wobei das elastische Laminat in Richtung der Maschine und quer zur Richtung der Maschine elastisch ist.

19. Das elastische Laminat nach Anspruch 17, wobei das elastische Laminat luftdurchlässig ist.

## Revendications

1. Procédé de formation de stratifiés de film élastique et de non-tissé(s), comprenant :
l'extrusion d'une composition de polymère thermoplastique comprenant un polymère élastique ; le soufflage de ladite composition de polymère thermoplastique extrudée pour former une bulle de film soufflé ; le fait de diriger ladite bulle vers un premier espace-pinceur formé entre une paire de rouleaux pour écraser ladite bulle en une feuille de film naissant ; la fourniture d'au moins un premier voile non-tissé fibreux ; et le fait de diriger au moins ledit premier voile non-tissé fibreux vers ledit espace-pinceur pour qu'il vienne en contact avec une face de ladite feuille de film naissant pour former un stratifié comprenant ladite feuille de film et au moins ledit premier voile non-tissé fibreux.

2. Procédé de formation de stratifiés de film élastique et de non-tissé(s), comprenant :
l'extrusion d'une composition de polymère thermoplastique comprenant un polymère élastique ; le soufflage de ladite composition de polymère thermoplastique extrudée pour former une bulle de film soufflé ; le fait de diriger ladite bulle vers un premier espace-pinceur formé entre une première paire de rouleaux pour écraser ladite bulle en une feuille de film, ladite première paire de rouleaux tournant à une première vitesse ; le fait de diriger ladite feuille de film vers un second espace-pinceur formé entre une seconde paire de rouleaux tournant à une seconde vitesse ; la fourniture d'au moins un premier voile non-tissé fibreux ; le fait de diriger au moins ledit premier voile non-tissé fibreux vers ledit premier espace-pinceur ou vers ledit second espace-pinceur pour qu'il vienne en contact avec une face de ladite feuille de film pour former un stratifié comprenant ladite feuille de film et au moins ledit premier voile non-tissé fibreux.

3. Procédé selon la revendication 1 ou 2, comprenant, en outre, la fourniture d'un second voile non-tissé fibreux et le fait de diriger ledit second voile non-tissé fibreux pour qu'il vienne en contact avec une face de ladite feuille de film opposée à la face avec laquelle vient en contact ledit premier voile non-tissé fibreux pour former un stratifié comprenant ladite feuille de film ayant au moins un voile non-tissé fibreux sur chaque face.

4. Procédé selon la revendication 1, dans lequel ledit premier espace-pinceur fonctionne à une vitesse linéaire supérieure à la vitesse linéaire à laquelle est fourni ledit au moins un voile non-tissé fibreux.

5. Procédé selon la revendication 1 ou 2, dans lequel ladite feuille de film est à l'état au moins partiellement fondu lorsque ledit premier voile non-tissé fibreux vient en contact avec ladite feuille de film.

6. Procédé selon la revendication 3, dans lequel ladite feuille de film est à l'état au moins partiellement fondu lorsque lesdits premier et second voiles non-tissés fibreux viennent en contact avec ladite feuille de film.

7. Procédé selon la revendication 2, dans lequel ledit premier voile non-tissé fibreux vient en contact avec ladite feuille de film au niveau dudit second espace-pinceur et dans lequel, en outre, ladite seconde vitesse est supérieure à ladite première vitesse.

8. Procédé selon la revendication 1 ou 2, comprenant, en outre, l'étape d'application d'un adhésif audit au moins un premier voile non-tissé fibreux avant d'amener en contact ladite feuille de film avec au moins ledit premier voile non-tissé fibreux.

9. Procédé selon la revendication 1 ou 2, comprenant, en outre, les étapes de fourniture d'au moins une paire de rouleaux rainurés et d'étirage incrémentiel dudit au moins un premier voile non-tissé fibreux avant d'amener en contact ladite feuille de film avec au moins ledit premier voile non-tissé fibreux.

10. Procédé selon la revendication 3, comprenant, en outre, les étapes de fourniture d'au moins deux paires de rouleaux rainurés et d'étirage incrémentiel desdits premier et second voiles non-tissés fibreux avant d'amener en contact ladite feuille de film avec lesdits premier et second voiles non-tissés fibreux.

11. Procédé selon la revendication 1 ou 2, dans lequel ledit au moins un premier voile non-tissé fibreux est fourni sous striction.

12. Procédé selon la revendication 3, dans lequel lesdits premier et second voiles non-tissés fibreux sont fournis sous striction.

13. Procédé selon la revendication 1 ou 2, comprenant, en outre, les étapes de fourniture d'un espace-pinceur supplémentaire et de liaison dudit stratifié dans ledit espace-pinceur supplémentaire, ladite opération de liaison étant sélectionnée dans le groupe consistant en la liaison thermique et la liaison ultrasonique.

14. Stratifié élastique formé par le procédé selon la revendication 1 ou 2.

15. Stratifié élastique selon la revendication 13, ledit stratifié élastique étant élastique dans le sens machine et dans le sens travers.

16. Stratifié élastique selon la revendication 13, ledit stratifié élastique étant respirant.

17. Stratifié élastique formé par le procédé selon la revendication 3.

18. Stratifié élastique selon la revendication 17, ledit stratifié élastique étant élastique dans le sens machine et dans le sens travers.

19. Stratifié élastique selon la revendication 17, ledit stratifié élastique étant respirant.
